# EUROPEAN PATENT APPLICATION

(11) **EP 4 631 762 A2**
(43) Date of publication of application: **15.10.2025**
(21) Application number: 25199673.2
(22) Date of filing: 10.11.2022
(51) Int. Cl.: B60K 35/10

(54) **INTRUSION PROTECTED USER INTERFACE AND FUNCTIONALITY FOR VEHICLE USING EMBEDDED CONTROLLER**

(30) Priority: 11.11.2021 US 202163263920 P
(62) Divisional of application: 22839015.9
(71) Applicant: Tesla, Inc., Austin, TX 78725 (US)
(72) Inventor: EXE, David, Austin, Texas, 78725 (US); SHIVAPRASAD, Shreyas, Austin, Texas, 78725 (US); KESSLER, Michael, Austin, Texas, 78725 (US); TROTTER, Gabrielle, Austin, Texas, 78725 (US); SHAH, Jitesh, Austin, Texas, 78725 (US); YUEN, Leon, Bothell, Washington, 98011 (US); JIN, Suryun, Austin, Texas, 78725 (US); RUNDEDDU, Edoardo, Austin, Texas, 78725 (US)
(74) Representative: Liesegang, Eva

(57) **Abstract**

A method implemented by a vehicle processor system which includes an embedded controller and an infotainment system, the method comprising: presenting, via a display positioned in the vehicle, a user interface which includes a visual representation of a vehicle operational parameter; determining a checksum value associated with the visual representation, wherein the checksum value is based on pixel information which forms the visual representation; determining that the determined checksum value is different from a known checksum value associated with a display of the vehicle operational parameter; and taking remedial action, wherein the remedial action comprises updating the user interface.

## Description

### BACKGROUND

### TECHNICAL FIELD

The present disclosure relates to an embedded controller in a vehicle, and more particularly, to use of an embedded controller to secure functionality of the vehicle.

### DESCRIPTION OF RELATED ART

Modem vehicles typically include a multitude of processors which control disparate functionality of the vehicles. For example, a vehicle may include a processor which controls a display positioned within the vehicle. In this example, the display may present an interface for use by a driver to view information relevant to operation of the vehicle. As an example, the display may allow for adjustment of a radio or sound system. As another example, the display may present a map associated with a present location of the vehicle.

Certain processors, such as the above-described display processor, may be accessible from the outside world. For example, the display processor may obtain information over a wireless network (e.g., a cellular network) for inclusion in the presented interface. Example information may include traffic information, map information, and so on. Since the processor is responsive to information transmitted from outside of the vehicle, there is a security risk that a malicious actor may tamper with the operation of the processor. For example, the malicious actor may be able to control the in-vehicle display.

As may be appreciated, as vehicles become more complex and connected with the outside world the risk of tampering with the operation of the vehicles increases. For example, a controller area network (CAN bus) in a vehicle may be remotely accessible over a wireless network. In this example, acceleration, braking, and so on, may be subject to tampering by malicious attacks.

US 2014 / 149 909 A1 discloses an on-screen gear selector for an automatic transmission, which provides an interface between the driver and the automatic transmission. The gear selector provides the current selection by the driver to the transmission control unit. The virtual on-screen gear selector provides safety and security features, and is incorporated into the software of the gear selector, such as not allowing the transmission to change from park until the brake pedal is depressed, or not allowing the transmission to change from drive to a lower gear or reverse if the speed of the vehicle is above a predetermined value, thereby avoiding damage to the transmission.

US 2016 / 131 247 A1 discloses a motion demonstration type electronic gear shift lever that may include a motion demonstration device having a gear shift stage selection device configured to change a gear shift stage of a vehicle, and movably mounted in the vehicle, a controller configured to recognize an operation of the gear shift stage selection device to move the motion demonstration device, and to transmit a signal generated by the gear shift stage selection device to a transmission control unit (TCU) of the vehicle to change the gear shift stage, and a movable device configured to move the motion demonstration device forward and rearward by receiving a signal from the controller.

EP 3 147 630 A1 discloses an interactive vehicle navigation system providing navigation instructions to arrive at a destination and a three-dimensional animated preview that provides a realistic view of a specified destination, including three-dimensional imagery of recognizable landmarks in the surroundings at the destination. The point of view from which the animated preview is generated is selected as to provide a vantage of the locale that avoids obstructions to the user's view, such as from a point of view that is higher than street level.

The invention is defined in the claims.

### SUMMARY

In some embodiments, a method implemented by an embedded controller is described. The method includes receiving, from a display positioned in the vehicle, user input directed to a user interface presented via the display, wherein the user interface is rendered by an infotainment system included in the vehicle; identifying, based on the user input, a gear shift request associated with adjusting a propulsion direction of the vehicle; and updating the user interface to include a static image associated with the gear shift request, wherein the embedded controller provides information associated with the static image to a timing controller of the display, wherein the embedded controller is in communication with a propulsion system which controls the propulsion direction of the vehicle, and wherein the embedded controller routes the gear shift request to the propulsion system.

In some embodiments, a method implemented by a vehicle processor system is described, with the vehicle processor system including an embedded controller and an infotainment system, and with the vehicle processor system being configured to present a user interface for presentation via a display of a vehicle. The user interface presents a first portion, the first portion including a static image indicative of a currently selected gear, the currently selected gear being associated with a particular propulsion direction, wherein the static image is provided via the embedded controller to a timing controller of the display; presents a second portion, the second portion including a dynamic user interface associated with disparate vehicle functionality, the dynamic user interface being rendered by the infotainment system; and responds to user input provided to the first portion associated with changing the currently selected gear, wherein the user input is routed by the display to the embedded controller, and wherein the embedded generates a gear change request for transmission to a propulsion system.

In some embodiments, a vehicle processor system is described. The vehicle processor system includes an embedded controller, the embedded controller configured to receive touch input information from the display, the touch input information reflecting interactions with the display by a person in the vehicle; and an infotainment system, the infotainment system being in communication with the embedded controller and configured to receive the touch input information from the embedded controller, wherein the infotainment system is configured to render a dynamic user interface for presentation via the display, wherein the embedded controller is configured to cause presentation of a static image reflecting a currently selected gear of the vehicle, and wherein the embedded controller provides information associated with the static image to a timing controller of the display.

In some embodiments, a vehicle is described. The vehicle includes an electric motor; a battery pack; a display in communication with a vehicle processor system; and the vehicle processor system comprising: an embedded controller, the embedded controller configured to receive touch input information from the display, the touch input information reflecting interactions with the display by a person in the vehicle; and an infotainment system, the infotainment system being in communication with the embedded controller and configured to receive the touch input information from the embedded controller, wherein the infotainment system is configured to render a dynamic user interface for presentation via the display, wherein the embedded controller is configured to cause presentation of a static image reflecting a currently selected gear of the vehicle, and wherein the embedded controller provides information associated with the static image to a timing controller of the display.

In some embodiments, a method is described. The method includes presenting, via a display positioned in the vehicle, a user interface which includes a visual representation of a vehicle operational parameter; determining a checksum value associated with the visual representation, wherein the checksum value is based on pixel information which forms the visual representation; determining that the determined checksum value is different from a known checksum value associated with a display of the vehicle operational parameter; and taking remedial action, wherein the remedial action comprises updating the user interface.

### BRIEF DESCRIPTION OF THE DRAWINGS

Figure 1 is a block diagram of an example vehicle processor system in communication with a display and a propulsion system.
Figure 2A is a block diagram of a timing controller included a display updating a user interface to present static images.
Figure 2B is another block diagram of a timing controller updating a user.
Figure 3 is a flowchart of an example process for securely handling a gear shift request provided by a driver using a user interface.
Figure 4 is a flowchart of an example process for updating a user interface based on failure of an infotainment system.
Figure 5A is a block diagram illustrating a vehicle processor system causing output of a user interface.
Figure 5B is a block diagram illustrating an embodiment of the vehicle processor system updating the user interface based on failure of an infotainment system.
Figure 5C is a block diagram illustrating another embodiment of the vehicle processor system updating the user interface based on failure of the infotainment system.
Figure 6 is an example user interface usable to provide a gear shift request.
Figure 7 is another example user interface usable to provide a gear shift request.
Figure 8 is a flowchart of an example process for taking action in response to the incorrect display of a vehicle operational parameter
Figure 9 is a block diagram illustrating an example vehicle which includes the vehicle processor system.

Embodiments of the present disclosure and their advantages are best understood by referring to the detailed description that follows. It should be appreciated that like reference numerals are used to identify like elements illustrated in one or more of the figures, wherein showings therein are for purposes of illustrating embodiments of the present disclosure and not for purposes of limiting the same.

### DETAILED DESCRIPTION

This specification describes techniques for secure operation of a vehicle, such as an electric vehicle. As will be described, a display (e.g., a touch-sensitive display) included in a vehicle may be used by a driver to adjust driving functionality of the vehicle. For example, the driver may cause a change to a vehicle operating parameter, such as a current gear, current heating ventilation and air conditioning (HVAC) settings, and so on. With respect to the example of a gear change or gear shift, the vehicle may adjust the current gear between drive, reverse, park, neutral, and so on. The current gear may represent a gear associated with a transmission or a propulsion direction (e.g., with respect to an electric vehicle). To ensure that a malicious attacker is unable to improperly adjust the vehicle's current gear, for example via malicious compromise of the display, this specification describes separation between (1) a processor or computer usable to present a user interface via the display and (2) an embedded controller usable to effectuate adjustment of the current gear. The processor or computer (herein referred to as the infotainment system) may, in some embodiments, be responsive to information received via a wireless connection (e.g., a cellular network) from the outside world. In contrast, the embedded controller may be blocked (e.g., firewalled) from the outside world. In this way, the vehicle may allow for the ease of use of adjusting a current gear while ensuring strict security.

To reduce the complexity associated with operating vehicles, it may be advantageous to remove at least a portion of the plethora of physical controls included in a vehicle. An example physical control may include a control to change propulsion direction. An autonomously or semi-autonomously operated vehicle may intelligently determine which propulsion direction is suitable during operation of the vehicle. In this example, the vehicle may determine that when in a driver's garage, the vehicle needs to be in reverse to back out of the garage. Subsequently, the vehicle may then determine that the vehicle should be placed into a drive mode to navigate towards a driver's destination. Thus, the physical control may be removed without detriment to a user experience of operating a vehicle.

As may be appreciated, discarding physical controls may additionally simplify manufacturing of a vehicle. For example, a physical control to change propulsion direction may typically be a stalk positioned proximate to a steering wheel or a gear shifter positioned to a right of the driver (e.g., in right-side driving regions). In this example, the physical control may be removed, and the functionality associated with the control instead be autonomously determined.

While autonomous vehicles provide benefits with respect to operation, at present they do not represent a substantial number of vehicles. However, the above-described physical control to adjust propulsion direction may still be removed and its functionality be instead moved to a software-defined control. For example, a display included in a vehicle may present a user interface which enables adjusting a current gear. In this example, the user interface may respond to user input associated with changing the current gear (e.g., from park to drive, from reverse to drive, and so on). Thus, a driver may provide simple user input to a centralized display in contrast to manipulating a physical input. Over time, for example as autonomous software becomes more commonplace, the vehicle may allow for autonomous operation of propulsion direction or current gear. The above-described vehicle thus includes the benefits of simplified manufacturing while also preserving a driver's ability to manually control the vehicle's gear setting.

As described above, the display of a vehicle may typically be controlled by a processor which is responsive to information provided from the outside world. For example, as the vehicle traverses a real-world environment, the processor may overlay information on a map included in a displayed user interface. In this example, the overlaid information may indicate a route the driver is to follow, traffic information, upcoming hazards, and so on. This information may be obtained using a wireless network, such as a cellular network, or any network capable of communicating with the vehicle to which the vehicle connects.

Typically, the user interface presented on vehicle displays may not be considered at a high risk of compromise (e.g., by a malicious attacker). For example, a vehicle display typically presents information relevant to operation of the vehicle but lacks functionality to directly control driving of the vehicle. In this example, the display may therefore represent a convenience for use by the driver while actual driving functionality (e.g., steering, acceleration, braking, gear changes, and so on) may be effectuated elsewhere in the vehicle (e.g., using physical controls, using touch controls located in a separate location, autonomously by the vehicle, and so on). Additionally, being able to attack a vehicle over a cellular network presents tremendous technological hurdles. For example, the malicious attacker may need to find exploits in software which controls the user interface. In this example, the exploits would need to be reachable by software which is responsive to information provided by the cellular network. As may be appreciated, an attacker may reach the exploit through various other techniques via a wireless or wired data connection.

Thus, while at present there have been limited examples of compromise by malicious attackers outside of a research setting, as more sophisticated vehicle controls are moved from physical controls to software-defined controls the vehicle's security posture may need to be improved. While the description herein focuses on software-defined controls to adjust a current gear, it may be appreciated that other vehicle controls may fall within the scope herein. For example, functionality to honk, adjust lights, turn on an emergency brake, set a cruise mode, and so on, may be controllable by software-defined controls.

To enhance security, this application describes use of a secure embedded controller which initially receives user input provided by a driver via a display of a vehicle. For example, the embedded controller may receive touch-based input information representing the driver's presses, swipes, gestures, and so on provided to a user interface. With respect to adjusting a current gear, the embedded controller may analyze received user input and determine whether the driver intends to adjust the current gear. Adjusting the current gear may include a change in the current propulsion direction. Upon a positive determination, the embedded controller may then transmit a gear change request (e.g., via a CAN bus or other messaging protocol / bus) to a processor or system associated with adjusting the current gear (hereinafter referred to as a propulsion system). The user input may additionally be forwarded to one or more processors which render a dynamic user interface for presentation on the display (hereinafter referred to as an infotainment system).

As will be described, the embedded controller may be isolated from the outside world. For example, the embedded controller may disallow arbitrary wireless communications. In contrast, wireless communications may be limited to the infotainment system. It may be appreciated that modem vehicle user interfaces increasingly include disparate functionality which rely upon a network connection. Such a network connection may be directly connected to the infotainment system, passed through a device not directly connected to the vehicle (e.g., a cellular telephone), or accessed in any other suitable manner. As an example, and as described above, navigation information may rely upon a network connection. As another example, streaming audio applications may rely upon a network connection to stream a driver's preferred audio. Thus, the infotainment system may need the ability to receive network information. Since the infotainment system is accessible from the outside world, there is an increased likelihood of the system being compromised.

The separation between the embedded controller and infotainment system enhances the security posture of the vehicle while also maintaining the above-described modern infotainment functionality. For example, the infotainment system may be disallowed from effectuating vehicle control changes (e.g., gear changes). As another example, the infotainment system may be disallowed from providing information to the embedded controller. Instead, the embedded controller may act as a gateway to the infotainment system thus ensuring that a malicious attacker has no path to compromising driving functionality through malicious control of the infotainment system.

In addition to ensuring secure gear changes, the embedded controller may output information for presentation via the display. For example, and as will be described, the embedded controller may update the user interface by directly providing visual information (hereinafter referred to as static images) to an element included in the display. An example element includes the timing controller which is used to drive the display. In this way, the embedded controller may bypass the infotainment system which may otherwise render the user interface.

An example static image may include a current gear setting. Thus, even if the infotainment system is compromised the display will still reflect an accurate gear setting. For example, if a driver provides user input to adjust the current gear, the embedded controller may provide one or more static images to the timing controller which reflect the adjusted gear. In this example, the driver may adjust the current gear from park to drive. Thus, the embedded controller may cause the user interface to present a static image indicating the current gear of drive.

The user interface presented to the driver may therefore include a first portion which includes static images from the embedded controller and a second portion which is rendered by the infotainment system. Thus, in addition to being blocked from changing vehicle controls, a malicious attacker may additionally be blocked from improperly manipulating the above-described first portion of the user interface. In this way, the driver may rely upon the first portion as providing information which is not able to be compromised.

While the figures below describe an example of changing a gear, as may be appreciated the techniques described herein can be used for other vehicle operational parameters. For example, static images may be used with respect to HVAC controls. As another example, static images may be used to display a current speed of the vehicle. These static images may be updated as the vehicle's speed is adjusted (e.g., in substantially real-time).

### Block Diagram

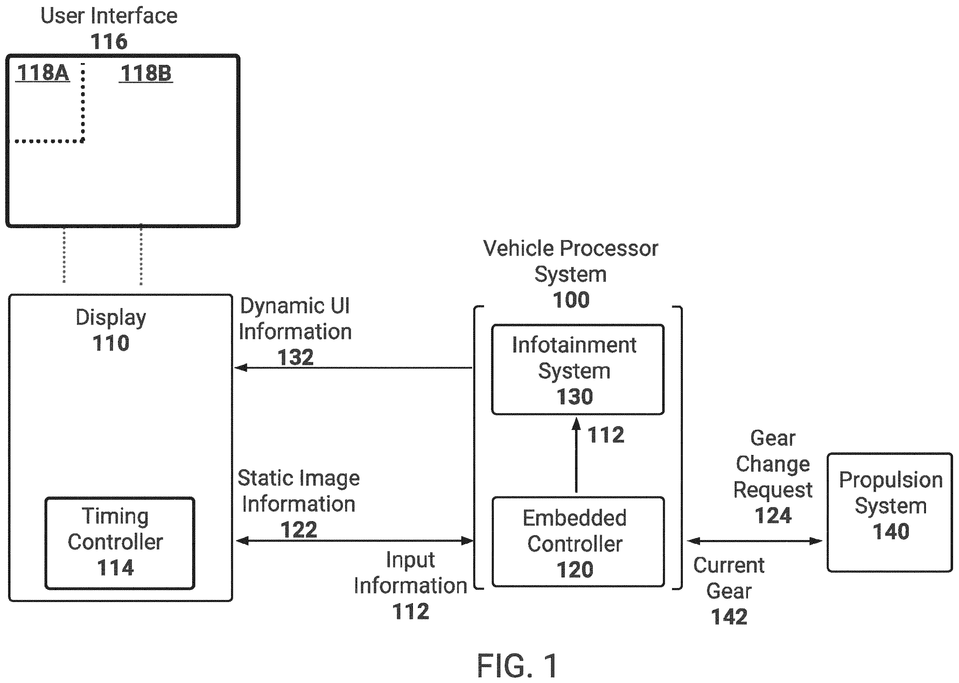

Figure 1 is a block diagram of an example vehicle processor system 100 in communication with a display 110 and a propulsion system 140. As described herein, the vehicle processor system 100 may be used to control a user interface 116 presented via the display 110 and to adjust operation of a vehicle. For example, the vehicle processor system 100 may be used to provide a gear change request 124 to adjust the current gear of the vehicle. Example gears may include reverse, drive, neutral, park, and so on. As may be appreciated, a gear may be interpreted broadly and does not require that the vehicle utilize physical gears to control transmission or propulsion. For example, a gear setting of 'drive' may be associated with a drive setting of a transmission, a propulsion direction of forward, and so on.

In the illustrated example, the user interface 116 includes a first portion 118A and a second portion 118B. The first portion 118A may be associated with control of the vehicle by a user. For example, the first portion 118A may be used to present a current gear setting of the vehicle and to allow for adjustment of the current gear. The second portion 118B may instead be used to control navigation, audio, heating ventilation, and air conditioning (HVAC), and so on. Thus, the first portion 118A may enable control of sensitive aspects of the vehicle (e.g., gear changes) which affect the driving of the vehicle while the second portion 118B may be usable to control aspects of the vehicle which do not directly affect driving. In some embodiments, the first portion 118A may depict HVAC controls / information, speed of the vehicle, critical alerts, autonomous alerts / information, and so on.

To allow for the above-described separation, the vehicle processor system 100 includes an embedded controller 120 and an infotainment system 130. The embedded controller 120 may, as an example, be a microcontroller, a processor, an application specific integrated circuit (ASIC), and so on. As will be described, the embedded controller 120 may provide static image information 122 to the display 110 which is usable to update the first portion 118A. The infotainment system 130 may be a computer, one or more processors, and so on. Similar to the above, the infotainment system 130 may provide dynamic user interface information 132 which is usable to update at least the second portion 118B.

The infotainment system 130 may execute applications, software, and so on, which, as described above, are associated with entertainment, navigation, control of non-driving aspects of the vehicle (e.g., HVAC), and so on. For example, the infotainment system 130 may enable disparate functionality to be performed via interaction with the user interface 116. In some embodiments, the infotainment system 130 may be associated with an online application store which allows for a driver or passenger to execute preferred applications (e.g., 'apps'). At least a portion of the disparate functionality may use a network connection of the vehicle (e.g., a cellular network). For example, audio may be streamed via the network connection. Thus, the applications, software, and so on, which execute via the infotainment engine 130, may be allowed to provide and receive information over the network connection.

In contrast, in some embodiments the embedded controller 120 may be constrained from providing or receiving information over the network connection. In this way, the embedded controller 120 may be configured to not be accessible from the outside world. The embedded controller 120 may, as an example, be accessible through a physical network connection which may be isolated from other internal networks (e.g., the CAN bus), thereby limiting access. As may be appreciated, this inaccessibility may reduce or eliminate a likelihood of a malicious attacker being able to tamper with the embedded controller and thus driving functionality of the vehicle (e.g., gear changes).

During operation of the vehicle, a driver or passenger may interact with the user interface 116 by providing touch-based input. For example, the display 110 may represent a touch-sensitive display. An example interaction may include adjusting an HVAC setting to increase, or reduce, a temperature within a cabin of the vehicle. Another example interaction may include adjusting selection of audio via interaction with a streaming audio application being executed by the infotainment system 130. Another example interaction may include adjusting a current gear of the vehicle (e.g., from reverse to drive, from drive to park, and so on).

The above-described touch-based input may be provided to the vehicle processor system 100 as input information 112. Advantageously, the input information 112 may be routed to the embedded controller 120 by the display 110 (e.g., via a connection, such as an I2C connection). In this way, the input information 112 may be analyzed by the embedded controller 120 to determine whether the input information 112 reflects an intent to change a current gear of the vehicle. As an example, the input information 112 may reflect the driver interacting with the first portion of the user interface 118A to adjust the current gear. The embedded controller 120 may thus determine that the driver intends to adjust the current gear.

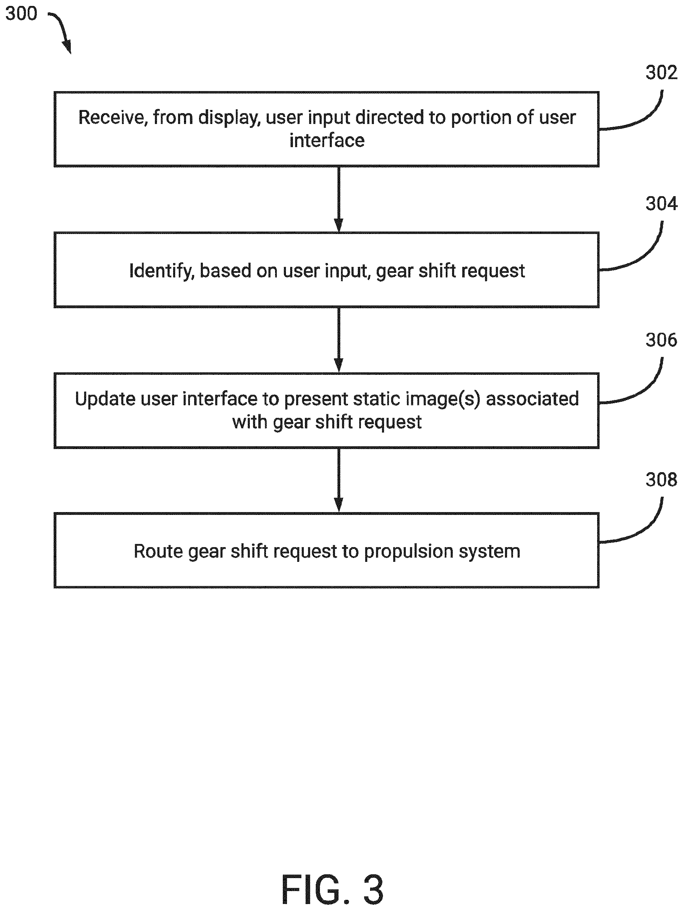

In response, the controller 120 may transmit a gear change request 124 to the propulsion system 140 to effectuate the adjustment. The propulsion system 140, as described herein, may represent a system or processor which controls a gear setting of the vehicle. An example of the embedded controller 120 analyzing input information 112 to determine a gear change is described below, with respect to Figure 3. In some embodiments, the propulsion system 140 may provide a current gear 142 to the embedded controller 120. For example, and as will be described, the embedded controller 120 may cause one or more static images to be presented via the user interface 116 which indicate the current gear. To ensure the accuracy of the presented current gear, the embedded controller 120 may receive information from the propulsion system 140 regarding the current gear 142.

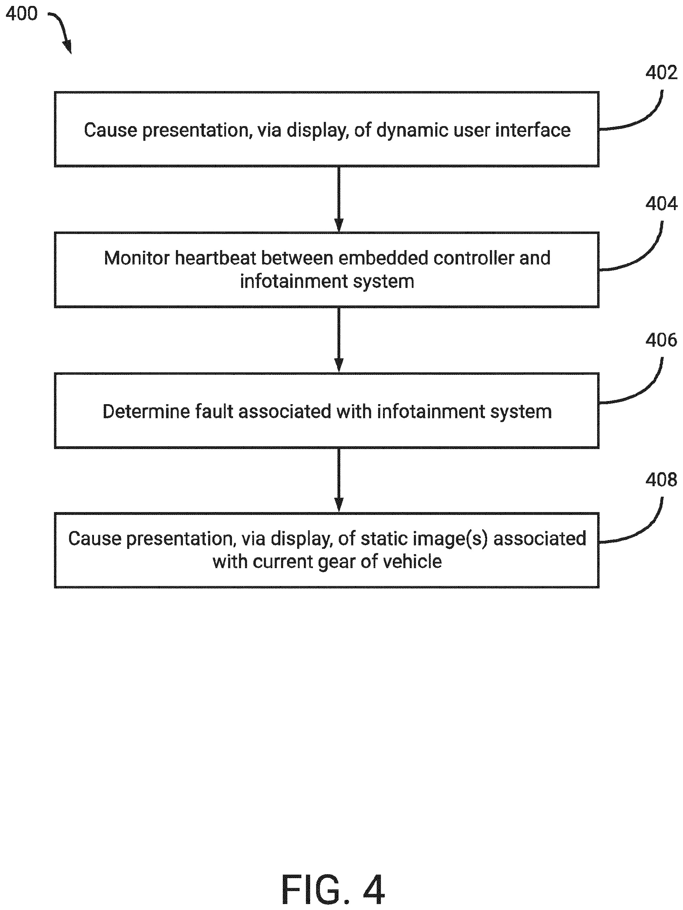

In some embodiments, the embedded controller 120 may analyze the input information 112 if it's associated with the first portion 118A. For example, the first portion 118A may be associated with certain pixels of the user interface 116. As another example, the first portion 118A may be defined by one or more boundaries. The embedded controller 120 may thus analyze the input information 112 if at least one touch event (e.g., a press, swipe, gesture, such as over a threshold time period) is included within the defined boundaries. Advantageously, and as will be expanded on below with respect to Figure 4, the embedded controller 120 may determine whether the input information 112 corresponding to the at least one touch event represents a user interaction intended to change the gear, or to an attempt by a malicious attacker to change the gear.

The input information 112 may then be routed to the infotainment system 130. As may be appreciated, a driver or passenger may more routinely interact with the display to adjust functionality not related to driving of the vehicle. For example, the driver or passenger may interact with a map presented in the user interface 116. In this example, the interaction may include selecting a destination, zooming in or out of the map, and so on. The infotainment system 130 may therefore analyze the input information 112 to update the user interface 116. For user input associated with the first portion 118A, the infotainment system 130 can discard the user input. For user input associated with the second portion 118B, the infotainment system 130 may use the input to update rendering of the user interface.

Advantageously, transmission of the gear change request 124 may be limited to the embedded controller 120. Thus, the infotainment system 130 may lack an ability to communicate with, or provide requests to, the propulsion system 140. In this way, a malicious attacker may be unable to interface with an element of the vehicle which controls gear changes.

In the illustrated example, the vehicle processor system 100 is providing static image information 122 and dynamic user interface information 132 to the display. The dynamic user interface information 132 may be rendered via the infotainment system 130, such as via a graphics processor unit, a processor, or from a computer memory and may reflect an interactive user interface. For example, the dynamic user interface information 132 may be provided to an input of the display 110 via DisplayPort, high-definition multimedia interface (HDMI), and so on. The dynamic user interface information 132 may thus allow for complex animated graphics and user interface elements to be presented via the display 110.

The static image information 122 may include an image, or selection of an image, which is to be presented in the first portion 118A of the user interface 116. An example image may include a representation of different gear settings in which the vehicle may be placed (e.g., drive, reverse, park, neutral) along with an indication of a currently selected gear. To ensure that the user interface 116 accurately reflects the currently selected gear, the embedded controller may directly provide the static image information 122 to the display. For example, the static image information 122 may be provided to a timing controller 114 of the display 110. As may be appreciated, the timing controller may set drivers of the display 110 which are usable to cause output of light which forms the user interface 116. Thus, the static image information 122 may cause the timing controller 114 to directly set pixel values of the display 110. In this way, a static image may be overlaid on the user interface 116.

The embedded controller 120 may optionally output static image information 122 for inclusion in first portion 118A during operation of the vehicle. Thus, the embedded controller 120 may output static image information 122 such that the user interface 116 includes one or more static images in every frame presented via the display 110.

In some embodiments, the embedded controller 120 may output static image information 122 until detection of the gear change request 124. For example, the embedded controller 120 may output static image information 122 reflecting that the vehicle is in a first gear. In this example, the first portion 118A may include an image reflecting the first gear. Upon determining that the driver intends to change gears, the embedded controller 120 may cease outputting of static image information 122. The infotainment system 130 may then render an animation reflecting adjustment from the first gear to a second gear for inclusion in the first portion 118A. After the animation, the embedded controller 120 may output static image information 122 which causes first portion 118A to indicate that the second gear is currently selected.

In some embodiments, the embedded controller 120 may output static image information 122 for a threshold amount of time after determining the gear change request 124. For example, the user interface 116 may be rendered based on dynamic user interface information 132 prior to the gear change request 124. In this example, the infotainment system 130 may render both the first portion 118A and the second portion 118B. Thus, the infotainment system 130 may render information reflecting a current gear. The embedded controller 120, as described above, may analyze input information 112 and determine that a driver intends to adjust the vehicle's gear to a subsequent gear. The embedded controller 120 may then output a static image reflecting the subsequent gear for at least the threshold amount of time.

As described above, in some embodiments the first portion 118A may be rendered, for at least a portion of the time, by the infotainment system 130. For example, the infotainment system 130 may cause the first portion 118A to present an animation reflecting a gear change. As another example, the infotainment system 130 may render visual information reflecting a current gear in the first portion 118A for a threshold amount of time. In these embodiments, the infotainment system 130 may avoid rendering visual information for inclusion in the first portion 118A when the embedded controller 120 is providing static image information 122. Optionally, the system 130 may render a particular color background (e.g., gray) and the static image information 122 may be overlaid over the particular color background. The embedded controller 120 may optionally provide information to the infotainment system 130 indicating times at which it is outputting static image information 122. Thus, the infotainment system 130 may avoid providing dynamic user interface information 132 which conflicts with the static image information 122.

Additionally, the user interface 116 may, in some embodiments, always present static images. For example, the timing controller 114 may output a static image reflecting a current gear. Upon the driver selecting a new gear, or the gear being autonomously selected, the user interface 116 may output an animation reflecting the change. The display 110 may maintain outputting a static image (e.g., reflecting the old or new gear), however the static image may be presented with an alpha value of 0. Thus, the static image may be transparent such that the animation is visible to the driver. Subsequent to the animation, the static image may be updated to have an alpha value of 1 such that the static image is visible. In this way, even if the animation were to be compromised by a malicious attacker, the static image will automatically be presented with an alpha value of 1 to override any incorrect or improper animation.

Thus, the embedded controller 120 may provide added security while the infotainment system 130 may maintain the ability to flexibly render at least a portion of the user interface 116. For example, the infotainment system 130 may be rapidly updated and improved upon via software updates (e.g., over the air updates). Since the infotainment system 130 is removed from actual control of driving aspects of the vehicle (e.g., gear changes), there is limited ability for any of the rapid improvements to negatively affect control of the vehicle.

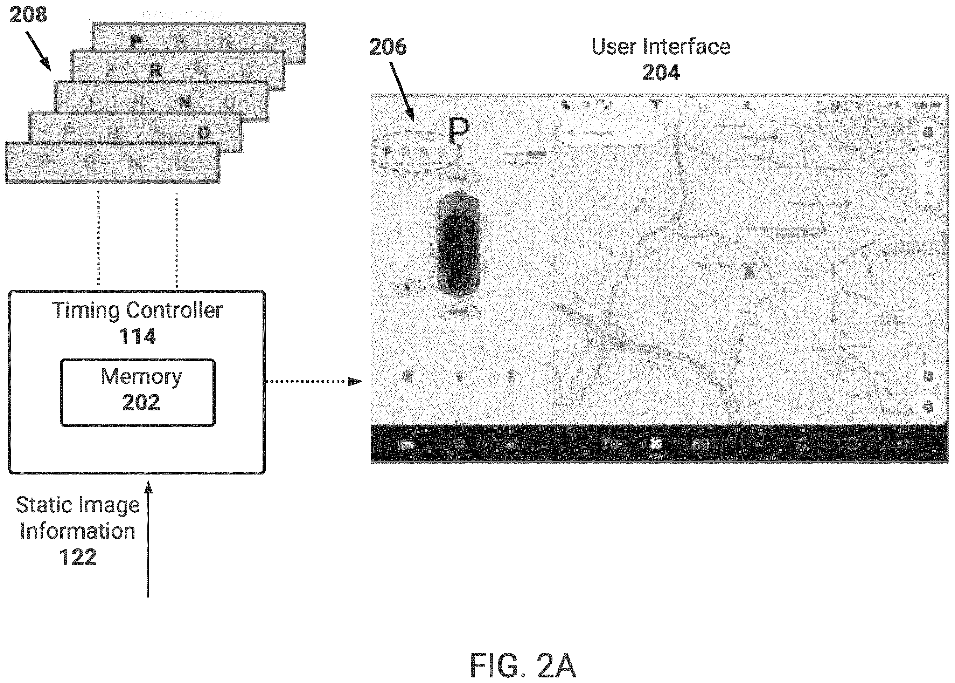

Figure 2A is a block diagram of a timing controller 114 updating a user interface 204 to present a static image 206. As described in Figure 1, the timing controller 114 may receive static image information 122 from an embedded controller (e.g., controller 120). In the example of Figure 2A, the timing controller 114 may include, or be in communication with, memory 202 which stores static images 208 for inclusion in user interface 204.

The memory 202 may store the static images 208 as pixel values (e.g., red, green, blue, values). Optionally, the memory 202 may store the static images 208 as being associated with a portion of the user interface 204 in which they are to be included (e.g., specific pixels of the user interface 204).

To cause inclusion of static image 206 in user interface 204, the static image information 122 may reflect a selection of the static image 206 from the stored static images 208. As an example, the embedded controller may determine that a driver intends to select a particular gear (e.g., park, represented as 'P' in the example). For example, the driver may have provided user input to select the 'P' symbol in user interface 204. The embedded controller may provide the request to the propulsion system, and if the request is granted, the controller may cause updating of the static image 206. The embedded controller may then provide information 122 which identifies selection of the static image 206. As an example, each of the static images 208 may be associated with an identifier such that the static image information 122 may include a particular identifier.

The selected static image 206 may then be provided to the timing controller 114 for inclusion in user interface 204. As may be appreciated, the static images 208 may be stored in the timing controller's 114 memory 202, transmitted along with the static image information 122 from the embedded controller 120, or may be stored in any other suitable location where the static image information 122 may be provided to, or otherwise accessed by, the timing controller 114. In some embodiments, the timing controller 114 may output the selected static image 206 until the embedded controller determines that the driver intends to change the gear. In some embodiments, the timing controller 114 may output the selected static image 206 for a threshold amount of time (e.g., 5 seconds, 10 seconds, one minute, one hour). After the threshold amount of time the infotainment system 130 (e.g., illustrated in Figure 1) may render similar visual elements to the selected static image 206. In this way, the infotainment system may be relied upon to provide a consistent visual experience across the user interface 204 except during gear changes. In some embodiments, the timing controller 114 may implement a state machine such that the selected static image 206 is output until receiving a subsequent image. When the timing controller 114 implementing the state machine receives static image information 122 from the embedded controller 120, the timing controller may adjust to a new state and display the corresponding selected static image 206 from the available static images 208.

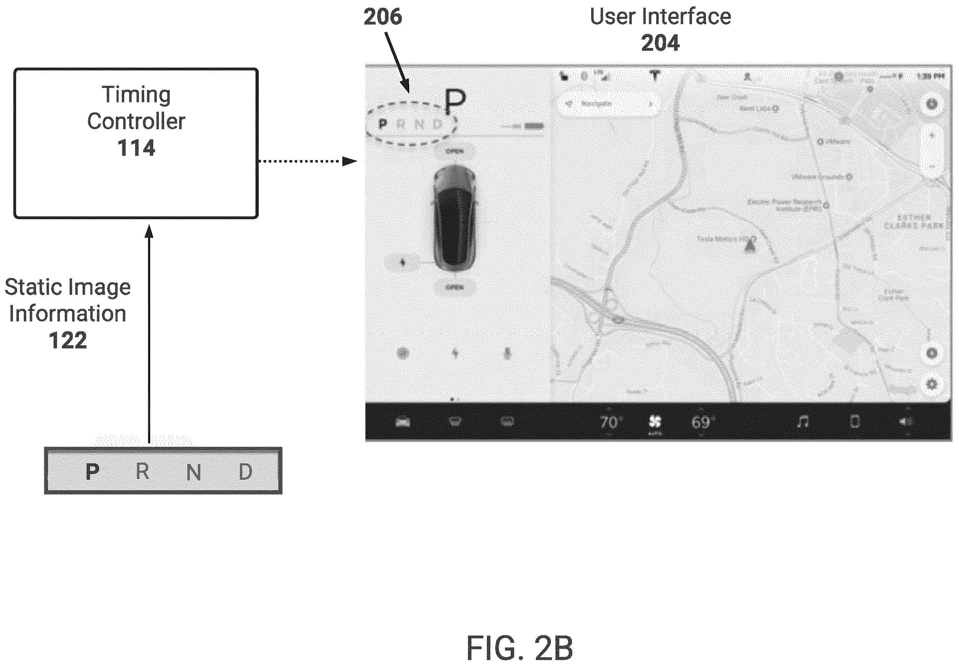

Figure 2B is another block diagram of a timing controller 114 updating a user interface 204 to present static images. In the illustrated example, the static image information 122 includes the selected static image 206. For example, the above-described embedded controller 120 may determine that the driver intends to change gears to be in park (e.g., based on user input from the driver). The embedded controller 120 may then select static image 206, which reflects that the vehicle is in park, and provide the selected static image 206 to the timing controller 114. For example, the selected static image 206 may be provided along with information indicating its desired position within the user interface 116 (e.g., specific pixels associated with the selected static image 206). Optionally, the static image information 122 may be received at a particular frequency (e.g., 30 Hz, 60 Hz, and so on). The particular frequency may be based on a refresh rate of the display 110. Optionally, the timing controller 114 may be instructed to output the selected static image 206 at the particular frequency.

The user interface 204 may additionally present an animation associated with a gear change. For example, upon selection of a new gear (e.g., park as described above), the user interface 204 may render an animation reflecting the change. After a threshold amount of time, the user interface 204 may present the selected static image 206 associated with park. Additionally, and as described above, in some embodiments a static image may always be presented and the alpha value associated with the static image (e.g., associate with each pixel or the entire image) may be toggled between 0 and 1. Thus, the static image may be substantially invisible to the driver during an animation and then toggled to be subsequently visible.

### Example Flowchart

Figure 3 is a flowchart of an example process 300 for securely handling a gear change request provided by a driver using a user interface, for example user interface 116 of Figure 1. For convenience, the process 300 will be described as being performed by a system of one or more processors. For example, the process 300 may be performed by the vehicle processor system 100 or the embedded controller 120 included in the vehicle processor system 100.

At block 302, the system receives user input from a display included in a vehicle. The display may be a touch-sensitive display which is positioned at a front of the vehicle (e.g., the display 110 of Figure 1). As described above, the display may present a user interface which is usable to access disparate functionality of the vehicle. For example, the user interface may allow for selection of music. As another example, the user interface may allow for interaction with a map or navigation user interface features.

The display may thus output information reflecting the driver's interaction with the user interface. For example, the display may provide information identifying locations in the user interface which the driver touched, specific gestures recognized by a processor associated with the display, and so on. As described in Figure 1, the user input may be provided to an embedded controller (e.g., embedded controller 120). In this way, all interaction with the user interface may be initially analyzed by the embedded controller.

At block 304, the system identifies a gear shift request based on the user input. As described herein, a vehicle operational parameter, such as a gear shift, may be adjusted via user input. The description below relates to adjusting the current gear, however the description herein may be applied to other vehicle operational parameters.

The user interface, such as user interface 204 in Figures 2A-2B, may include selectable options to adjust a current gear of the vehicle. For example, the user interface may include a portion which identifies each of the gears along with a currently selected gear. In this example, the system may determine that the user input is being provided to a specific gear included in the portion. Example gears may include drive, reverse, park, neutral, and so on. The determination may be based on locations within the user interface associated with the user input. For example, the system may store information identifying locations in the user interface which are associated with selecting each of the gears. In this example, the system may therefore determine that the driver is pressing his/her finger on a specific gear. As a further example, user input indicating a gear change request may include a type of user gesture (e.g., a swipe, press, extended press, and so on) which may or may not be restricted to a bounded area of the display. The specific gear, if different from a currently selected gear, may thus trigger a gear shift request to change to the specific gear.

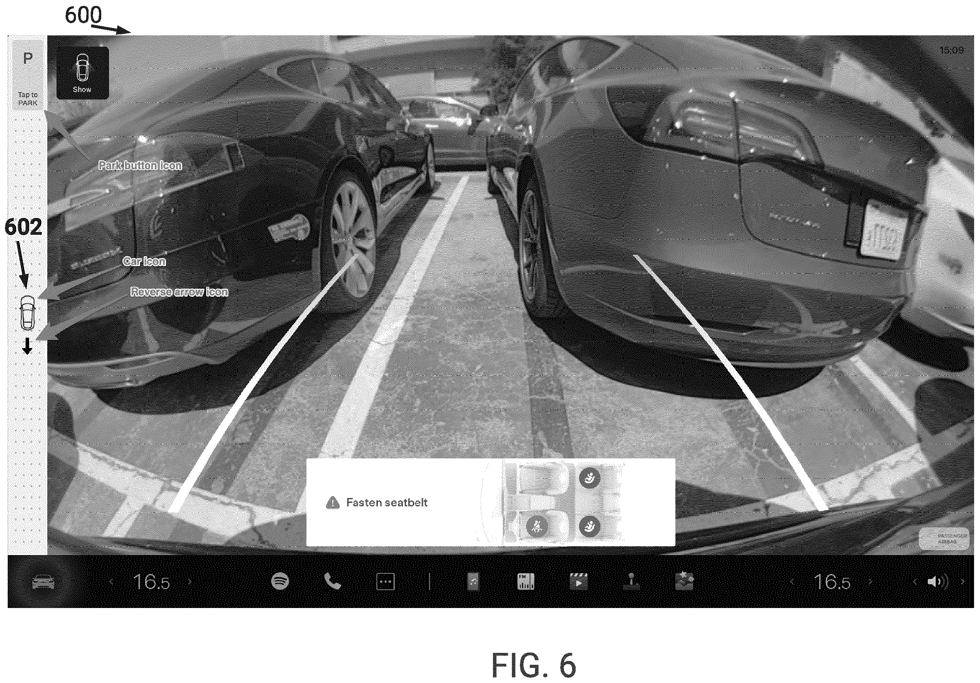

A different user interface, such as illustrated in Figures 6-7, may allow for changing gears via swiping a visual element (e.g., vehicle 602) in a particular direction. For example, the driver may swipe the visual element upwards to indicate an intent to put the vehicle in drive. As another example, the driver may swipe downwards to indicate an intent to put the vehicle in reverse. The system may determine whether the user input is associated with moving the visual element along a substantially straight path upwards or downwards. The system may also determine whether the user input was greater than a threshold velocity and/or greater than a threshold distance. The system may also determine whether a user input was greater than a threshold time (e.g., a user may press a display element for greater than three seconds to enact a change). Based on the above-described analyses, the system may determine whether the driver intends to place the vehicle in drive or reverse. Optionally, the user interface may include selectable objects associated with placing the vehicle in park or neutral (e.g., the park button icon of Figure 6).

At block 306, the system updates the user interface to present a static image associated with the gear shift request. As described in Figures 1-2B, the embedded controller causes the display to output a static image reflecting an updated gear selected by the driver. For example, the embedded controller may provide a static image reflecting the updated gear to a timing controller of the display. In this example, the timing controller may directly set drivers, values of pixels, and so on, to cause output of the static image via the display. As another example, the embedded controller may provide information usable to select a static image which reflects the updated gear. The timing controller may store, or be in communication with memory which stores, static images. Thus, the information may be used to select from among the static images.

In some embodiments, the system may initially present an animation associated with changing of the gear. For example, and with respect to Figures 6-7, the user interface may be updated based on the driver's touch input dragging the visual element upwards or downwards. As described in Figures 1-2B, the infotainment system may render a dynamic user interface which is responsive to the user input. For example, the embedded controller may provide the user input to the infotainment system. In this example, the infotainment system may determine that the user input is directed to dragging of the visual element. Thus, the infotainment system may render dynamic user interface information which animates the dragging. After the animation, the embedded controller may output a static image reflecting the updated gear.

At block 308, the system routes the gear shift request to a propulsion system. To effectuate the gear change to the updated gear, the embedded controller provides a request to a propulsion system to update the currently selected gear. The propulsion system may represent a processor, controller, and so on, which adjusts a propulsion direction of the vehicle. For example, a vehicle with a transmission may be updated to reflect the updated gear. As another example, an electric vehicle may be updated such that its motor rotates in a particular direction associated with the updated propulsion direction.

### Detecting failure of infotainment system

Figure 4 is a flowchart of an example process 400 for updating a user interface based on failure of an infotainment system. For convenience, the process 400 will be described as being performed by a system of one or more processors. For example, the process 400 may be performed by the vehicle processor system 100 or the embedded controller 120 included in the vehicle processor system 100.

At block 402, the system causes presentation of a dynamic user interface via a display. As described in Figures 1-2B, the system may present a dynamic user interface which is usable by a driver or passenger to perform disparate functionality. The dynamic user interface may be rendered by an infotainment system and provided to the display.

At block 404, the system monitors a heartbeat between the embedded controller and the infotainment system. To detect a crash or failure of the infotainment system, the embedded controller may receive a heartbeat from the infotainment system. The heartbeat may be a constant signal provided to the embedded controller by the infotainment system. The heartbeat may also represent a periodic signal which is provided to the embedded controller by the infotainment system. The heartbeat may optionally include information reflecting proper operation of the infotainment system.

At block 406, the system determines a fault associated with the infotainment system. The embedded controller determines that the infotainment system is malfunctioning based on lack of a received heartbeat, a received heartbeat that differs from what is expected by the embedded controller, or information included in the heartbeat indicating a failure. For example, the infotainment system may crash such that the heartbeat fails to be provided to the embedded controller. As another example, the infotainment system may suffer an error or fault and include information in the heartbeat signal (e.g., information related to such error or fault). Certain errors or faults may interrupt the proper rendering of the dynamic user interface.

At block 408, the system causes presentation of static images associated with the current gear. Since the infotainment system renders the dynamic user interface which may substantially fill the display, an error or failure of the system may result in the user interface not being rendered or being rendered improperly. To ensure that the display presents information related to driving of the vehicle, the embedded controller may cause the display to present a static image associated with a current gear of the vehicle. The static image may be presented with an alpha value which causes the static image to be presented (e.g., a value of 1). In some embodiments, the embedded controller may additionally render a static image indicating a measure of gas or stored energy left in the vehicle. In some embodiments, the embedded controller may additionally render, and update, a speed at which the vehicle is traveling. The static image may optionally be present on the display at all times, including when the infotainment system is functioning, with an alpha value of 0, such that when the infotainment system is functioning some or all images rendered by the embedded controller are hidden from the user.

In some embodiments, the static image may include pixels which form a representation of a current gear. Additionally, the static image may include pixels surrounding the representation. For example, the surrounding pixels may be a particular color to ensure that the representation is visible. As an example, the surrounding pixels may be white, gray, and so on. Thus, the representation may be presented darker (e.g., black, dark gray) and even if the display is presenting nothing else (e.g., such that the background would otherwise be black) the representation may be visible.

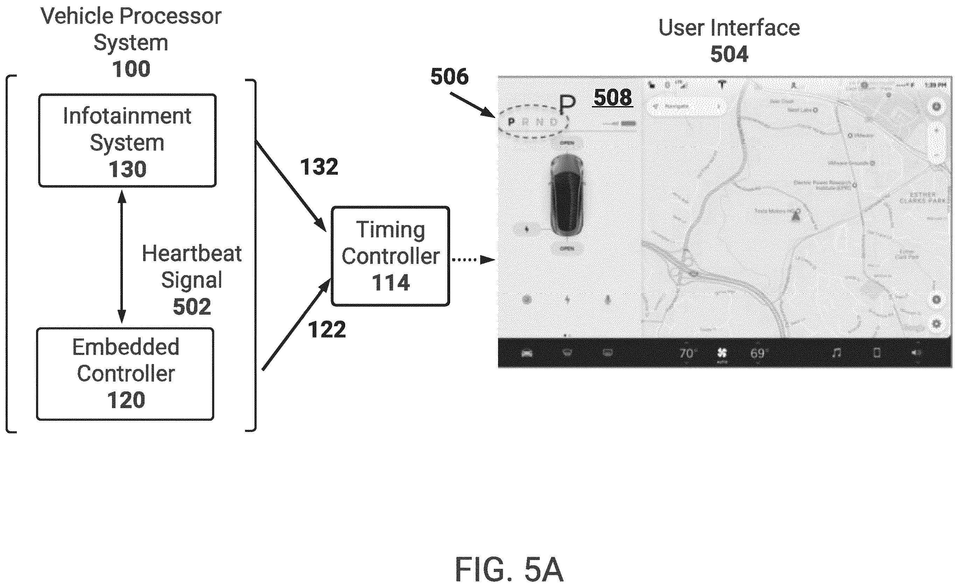

Figure 5A is a block diagram illustrating a vehicle processor system 100 causing output of a user interface 504 on a display of a vehicle. The vehicle processor system 100, as described herein, may include an infotainment system 130 and an embedded controller 120. As descried in Figure 4, a heartbeat signal 502 may be provided by the system 130 to the embedded controller 120. For example, the system 130 may periodically output the signal. As another example, the embedded controller 120 may periodically request the heartbeat signal 502.

In the illustrated example, the vehicle processor system 100 is providing static image information 122 and dynamic user interface information 132 as described herein. Thus, the user interface 504 includes a static image 506 along with the dynamically rendered user interface 508. In some embodiments, the infotainment system 130 may render the user interface 504. For example, and as described above with respect to Figure 1, in some embodiments the embedded controller may output a static image of a current gear setting for a threshold amount of time after a gear change request.

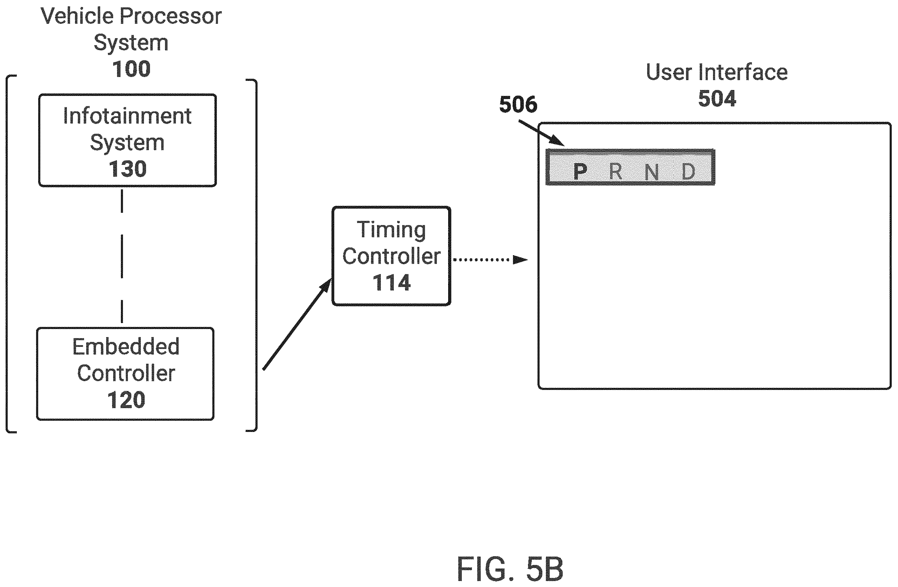

Figure 5B is a block diagram illustrating an embodiment of the vehicle processor system 100 updating the user interface 504 based on failure of the infotainment system 130. As illustrated, the heartbeat signal 502 has been interrupted due to, for example, failure of the infotainment system 130 or malicious interference with the infotainment system 130. Based on the failure, the user interface 504 therefore reflects the static image 506 of the currently selected gear. In this way, the driver may view information relevant to driving of the vehicle. In addition to the currently selected gear, in some embodiments the user interface 504 may present static images reflecting HVAC settings, speed, critical alerts, autonomous alerts or information, state of charge (e.g., charge level), blinker information (e.g., whether one or more blinkers are on), and so on.

In embodiments in which the infotainment system 130 was rendering the user interface 504, the failure of the infotainment system 130 may cause the entire user interface 504 to be removed. Upon detecting a lack of the heartbeat signal 502, the embedded controller 120 may thus output static image 506. For example, the embedded controller 120 may store information identifying a current gear. As another example, the embedded controller 120 may request the current gear from the propulsion system illustrated in Figure 1. In this way, the embedded controller 120 may rapidly recover from the failure of the infotainment system 130.

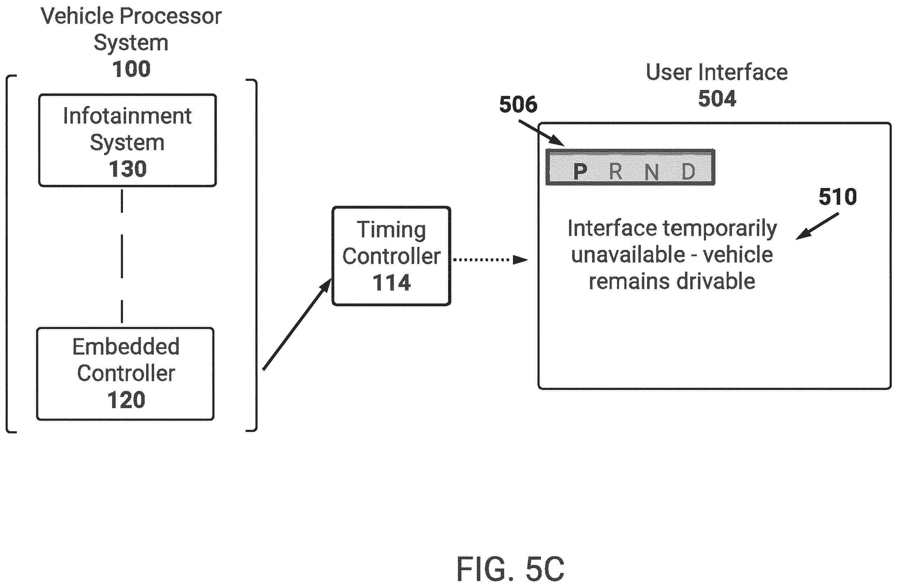

Figure 5C is a block diagram illustrating another embodiment of the vehicle processor system 100 updating the user interface 504 based on failure of the infotainment system 130. In some embodiments, the embedded controller 120 may output additional information 510 reflecting the failure of the system 130. For example, the information 510 may include text indicating that the interface is temporarily unavailable.

### Example User Interfaces

Figure 6 is an example user interface 600 usable to provide a gear shift request. As described in Figure 3, a driver may provide input to drag visual element 602 upwards or downwards to trigger a gear shift request. For example, dragging down may cause the gear to be in reverse (e.g., the propulsion direction to be in reverse). As another example, dragging upwards may cause the gear to be drive (e.g., the propulsion direction to be forward).

The above-described embedded controller may analyze the received user input and determine that the driver intends to change gears. In some embodiments, an animation may be presented reflecting adjustment of the gear. For example, the animation may depict the visual element 602 moving upwards when the selected gear is drive. Subsequently, the embedded controller may output a static image of the visual element 602 being further up in the user interface 600. As another example, the animation may depict the visual element 602 moving downwards when the selected gear is reverse. Subsequently, the embedded controller may output a static image of the visual element 602 being further down in the user interface 600.

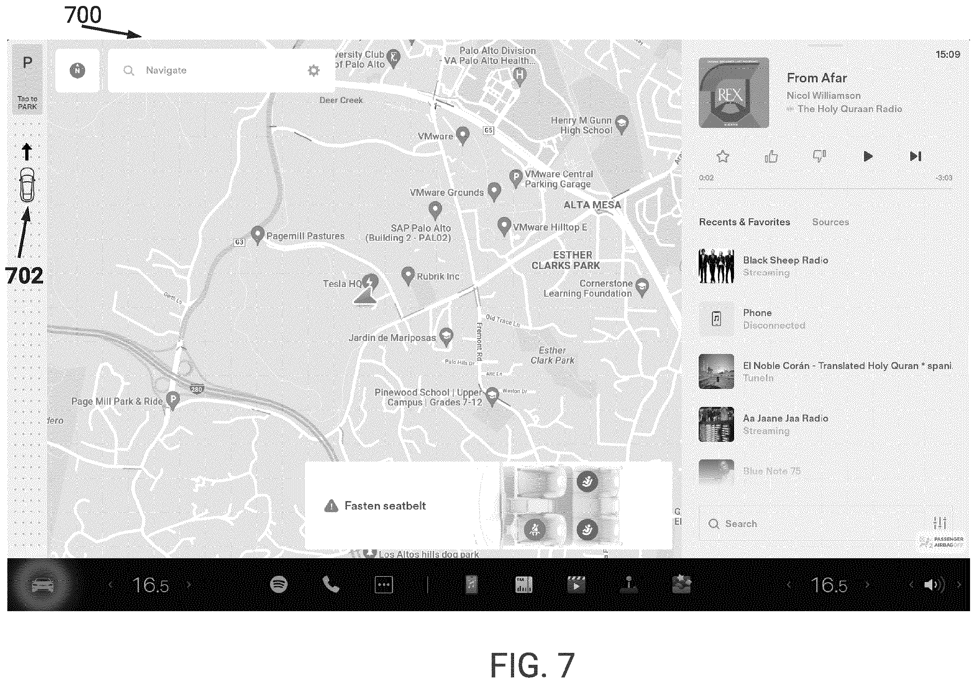

Figure 7 is another example user interface 700 presented via a display of a vehicle. In the illustrated example, a visual element 702 has been dragged upward in the user interface 700 to place the vehicle in drive. The visual element 702 may represent a static image provided by the embedded controller to a timing controller of the display.

### Detecting and Responding to Incorrect Information Display

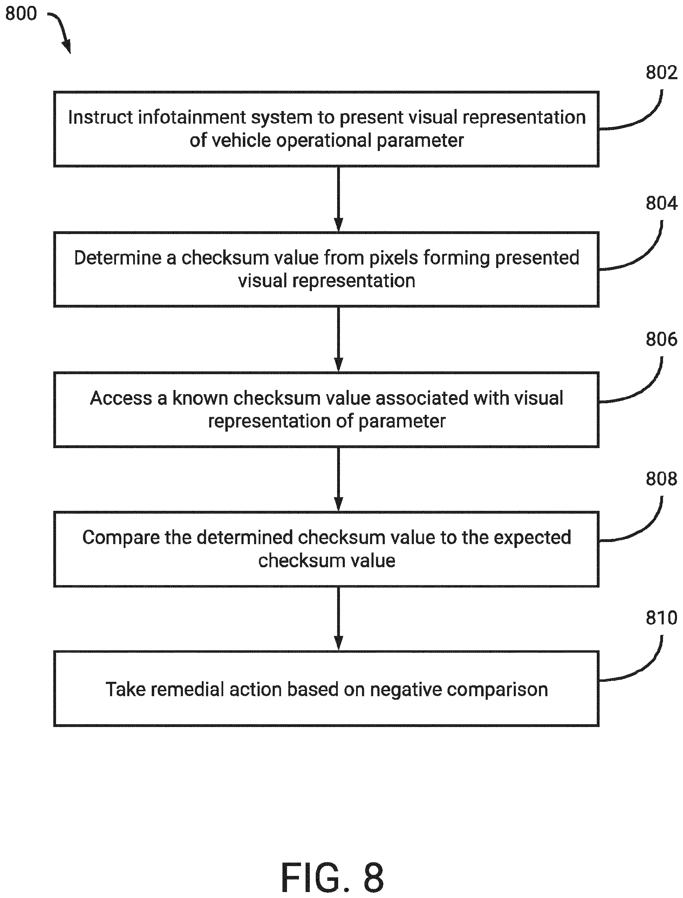

Figure 8 is a flowchart of an example process 800 for taking action in response to the incorrect display of a vehicle operational parameter. For convenience, the process 800 will be described as being performed by a series of one or more processors. For example, the process 800 may be performed by the vehicle processor system 100 or the embedded controller 120 included in the vehicle processor system 100.

At block 802, the system causes the infotainment system 130 to present a visual representation of a vehicle operational parameter. As described in Figures 1-2B, the vehicle operational parameter may be a current gear 142, a current direction of propulsion, a current state of the parking brake, current HVAC controls, a current speed, disparate other vehicle controls, and so on, displayed as a static image information 122 on the display 110.

At block 804, the system (e.g., the embedded controller) determines a checksum value based on pixel information which forms the visual representation of the vehicle operational parameter (e.g., pixel values of the visual representation, such as red, green, blue values). The checksum value may be determined using, as a few examples, a cyclic redundancy check, parity byte algorithm, frame check sequence, and so on. The checksum value may be determined using an error-detecting code. The vehicle operational parameter may be visually represented on the display 110 (e.g., the static image 506 in Figure 5, visual element 702 in Figure 7, and so on). In one example, the pixel information may be determined, or otherwise identified, by the timing controller 114 and transmitted to the embedded controller 120 for determination of a checksum value.

In another example, the embedded controller 120 may access the pixel information related to the vehicle operational parameter being displayed directly from the display 110 (e.g., from an HDMI controller, USB controller, special purpose image data decoder, and so on). In another example, the infotainment system 130 may be in control of the display 110 and directly transmit the pixel values to both the display 110 and the embedded controller 120, such that the embedded controller may directly monitor the display information output by the infotainment system 130 as it is received by the display.

At block 806, the system accesses a known checksum value associated with the displayed vehicle operational parameter. The known checksum value may be stored in a memory 202 of the timing controller 114, a memory of the embedded controller 120, and so on. The known checksum value may also be calculated in real-time by the embedded controller 120, timing controller 114, and so on. For example, to calculate a known checksum value in real-time, the embedded controller 120 may receive static information (e.g., a static image information 122 in Figure 1) from the display 110. The embedded controller may then access a memory of the vehicle processor system 100 storing an expected checksum value for the static image information 122.

At block 808, the system compares the checksum value for the visual representation to the known checksum value for that operational parameter accessed in block 806.

At block 810, the system takes a remedial action (e.g., displaying an error message on the display, displaying a warning on the display, turning off the infotainment system, turning off the display, changing the current gear of the propulsion system, and so on) in response to a negative comparison. For example, the infotainment system 130 may be instructed by the embedded controller 120 to override the current visual representation on the display 110 to replace the displayed system with a warning or static image. In another example, the embedded controller 120 may instruct the timing controller 114 to directly take control of a portion, or all of, the display 110 from the infotainment system 130 and display a selected static image 206 representing the correct value of the vehicle operational parameter. For example, the embedded controller 120 may cause presentation of static images as described herein (e.g., the controller 120 may cause the timing controller to directly set pixel values).

### Example Vehicle

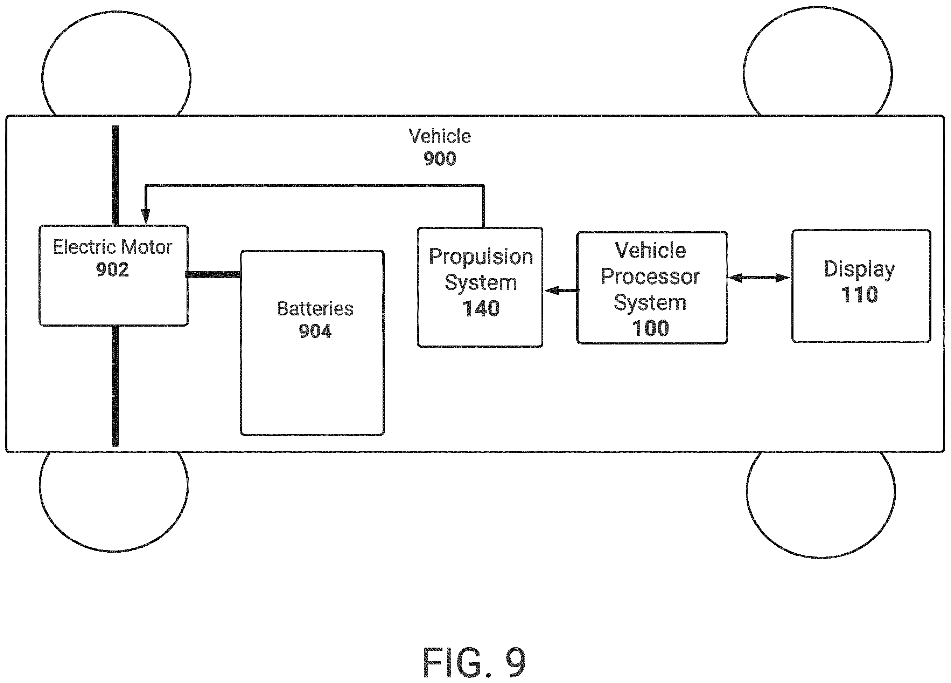

Figure 9 illustrates a block diagram of a vehicle 900. The vehicle 900 may include one or more electric motors 902 which cause movement of the vehicle 900. The electric motors 902 may include, for example, induction motors, permanent magnet motors, and so on. An energy storage device 904 (e.g., a battery pack, one or more battery packs each comprising a multitude of batteries, one or more capacitors or supercapacitors, and so on) may be used to power the electric motors 902 as is known by those skilled in the art.

The vehicle 900 further includes a propulsion system usable to set a gear (e.g., a propulsion direction) for the vehicle. With respect to an electric vehicle, the propulsion system 140 may adjust operation of the electric motor 902 to change propulsion direction. Additionally, the vehicle includes the vehicle processor system 100 and display 110 described above.

### Other Embodiments

All of the processes described herein may be embodied in, and fully automated, via software code modules executed by a computing system that includes one or more computers or processors. The code modules may be stored in any type of non-transitory computer-readable medium or other computer storage device. Some or all the methods may be embodied in specialized computer hardware.

Many other variations than those described herein will be apparent from this disclosure. For example, depending on the embodiment, certain acts, events, or functions of any of the algorithms described herein can be performed in a different sequence or can be added, merged, or left out altogether (for example, not all described acts or events are necessary for the practice of the algorithms). Moreover, in certain embodiments, acts or events can be performed concurrently, for example, through multi-threaded processing, interrupt processing, or multiple processors or processor cores or on other parallel architectures, rather than sequentially. In addition, different tasks or processes can be performed by different machines and/or computing systems that can function together.

The various illustrative logical blocks, modules, and engines described in connection with the embodiments disclosed herein can be implemented or performed by a machine, such as a processing unit or processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A processor can be a microprocessor, but in the alternative, the processor can be a controller, microcontroller, or state machine, combinations of the same, or the like. A processor can include electrical circuitry configured to process computer-executable instructions. In another embodiment, a processor includes an FPGA or other programmable device that performs logic operations without processing computer-executable instructions. A processor can also be implemented as a combination of computing devices, for example, a combination of a DSP and a microprocessor, a plurality of microprocessors, one or more microprocessors in conjunction with a DSP core, or any other such configuration. Although described herein primarily with respect to digital technology, a processor may also include primarily analog components. For example, some or all of the signal processing algorithms described herein may be implemented in analog circuitry or mixed analog and digital circuitry. A computing environment can include any type of computer system, including, but not limited to, a computer system based on a microprocessor, a mainframe computer, a digital signal processor, a portable computing device, a device controller, or a computational engine within an appliance, to name a few.

Conditional language such as, among others, "can," "could," "might" or "may," unless specifically stated otherwise, are understood within the context as used in general to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Disjunctive language such as the phrase "at least one of X, Y, or Z," unless specifically stated otherwise, is understood with the context as used in general to present that an item, term, etc., may be either X, Y, or Z, or any combination thereof (for example, X, Y, and/or Z). Thus, such disjunctive language is not generally intended to, and should not, imply that certain embodiments require at least one of X, at least one of Y, or at least one of Z to each be present.

Any process descriptions, elements or blocks in the flow diagrams described herein and/or depicted in the attached figures should be understood as potentially representing modules, segments, or portions of code which include one or more executable instructions for implementing specific logical functions or elements in the process. Alternate implementations are included within the scope of the embodiments described herein in which elements or functions may be deleted, executed out of order from that shown, or discussed, including substantially concurrently or in reverse order, depending on the functionality involved as would be understood by those skilled in the art.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B and C" can include a first processor configured to carry out recitation A working in conjunction with a second processor configured to carry out recitations B and C.

## Claims

1. A method implemented by a vehicle processor system which includes an embedded controller and an infotainment system, the method comprising:
presenting, via a display positioned in the vehicle, a user interface which includes a visual representation of a vehicle operational parameter;
determining a checksum value associated with the visual representation, wherein the checksum value is based on pixel information which forms the visual representation;
determining that the determined checksum value is different from a known checksum value associated with a display of the vehicle operational parameter; and
taking remedial action, wherein the remedial action comprises updating the user interface.

2. The method of claim 1, wherein the user interface is presented via the infotainment system.

3. The method of claim 1 or 2, wherein the checksum value si determined via the embedded controller.

4. The method of claim 1, wherein the embedded controller determines that the determined checksum value is different from the known checksum value.

5. The method of claim 4, wherein the embedded controller accesses or stores individual known checksum values associated with individual vehicle operational parameters.

6. The method of one of the preceding claims, wherein a vehicle operational parameter comprises a current gear, a current direction of propulsion, current HVAC controls, and/or a current speed of the vehicle.

7. The method of one of the preceding claims, wherein the embedded controller is in communication with a propulsion system and wherein the infotainment system is disallowed from communication with the propulsion system.

8. The method of one of the preceding claims, wherein the remedial action comprises updating the user interface to display a warning.

9. The method of one of the preceding claims, wherein the remedial action comprises turning off the infotainment system, wherein the embedded controller directly controls the display via a timing controller.

10. The method of claim 9, wherein the embedded controller causes display of a static image associated with the vehicle operational parameter.

11. The method of claim 10, wherein the embedded controller causes a timing controller of the display to display the static image.

12. The method of claim 11, wherein the timing controller stores a plurality of static images associated with vehicle operational parameters.

13. The method of one of the preceding claims, wherein the checksum value is a cyclic redundancy check.

14. A system comprising one or more processors and non-transitory computer storage media storing instructions that when executed by the one or more processors, cause the processors to perform the method of one of the preceding claims.
